# EUROPÄISCHE PATENTSCHRIFT

(11) **EP 2 610 117 B1**
(45) Veröffentlichungstag und Bekanntmachung des Hinweises auf die Patenterteilung: **02.06.2021**
(21) Anmeldenummer: 12197415.8
(22) Anmeldetag: 17.12.2012
(51) Int. Cl.: B60S 1/04, B60R 13/08

(54) **Befestigungssystem für einen Wischerantrieb eines Kraftfahrzeugs**
Fastening system for a wiper drive of a motor vehicle
Système de fixation pour un entraînement d'essuie-glace d'un véhicule automobile

(30) Priorität: 30.12.2011 DE 102011090153
(43) Veröffentlichungstag der Anmeldung: 03.07.2013
(73) Patentinhaber: Robert Bosch GmbH, 70442 Stuttgart (DE)
(72) Erfinder: Hawighorst, Achim, 77830 Buehlertal (DE); Herbst, Juergen, Waltham, 024510000 (US)

(56) Entgegenhaltungen:
- EP-A2- 1 291 254
- WO-A1-2005/080157
- DE-A1-102004 016 810
- FR-A1- 2 855 477

## Beschreibung

Die Erfindung betrifft ein Befestigungssystem für einen Wischerantrieb eines Kraftfahrzeugs, aufweisend ein Antriebsbefestigungselement, das an dem Wischerantrieb angeordnet ist, ein Entkopplungselement, das mit einer Karosserie des Kraftfahrzeugs verbindbar ist, und ein Verbindungselement, das das Antriebsbefestigungselements mit dem Entkopplungselements verbindet, wobei das Antriebsbefestigungselement, das Verbindungselement und das Entkopplungselement jeweils eine Körperschallimpedanz aufweisen.

### Stand der Technik

Um Wischerdirektantriebe an einer Fahrzeugkarosserie eines Kraftfahrzeugs zu fixieren, werden die Wischerantriebe an einer Adapterplatte befestigt, so dass durch den modularen Aufbau der Wischerdirektantrieb in unterschiedlichen Fahrzeugkarosserien montiert werden kann. Durch die Adapterplatte übertragen sich jedoch die Antriebsgeräusche des Wischerdirektantriebs als Körperschall auf die Fahrzeugkarosserie des Kraftfahrzeugs.

Ein gattungsgemäßes Befestigungssystem ist beispielsweise aus der DE 10 2004 016810 A1 bekannt. Weiterer Stand der Technik ist aus der FR 2 855 477 A1, der WO 2005/080157 A1 und der EP 1 291 254 A2 bekannt.

### Offenbarung der Erfindung

Es ist Aufgabe der Erfindung, die Übertragung von Körperschall von einem Wischerantrieb auf die Fahrzeugkarosserie eines Kraftfahrzeugs zu reduzieren.

Diese Aufgabe wird gemäß dem Anspruch 1 dadurch gelöst, dass das Befestigungssystem einen Wischerantrieb ein Antriebsbefestigungselement, das an dem Wischerantrieb angeordnet ist, ein stiftförmiges Entkopplungselement, das mit einer Karosserie des Kraftfahrzeugs verbindbar ist, und ein Verbindungselement, das das Antriebsbefestigungselements mit dem Entkopplungselements verbindet, umfasst. Das Antriebsbefestigungselement, das Verbindungselement und das Entkopplungselement weisen jeweils eine Körperschallimpedanz auf. Zur Reduktion der Schallübertragung vom Wischerantrieb auf die Karosserie des Fahrzeugs ist die Körperschallimpedanz zwischen dem Antriebsbefestigungselement und dem Verbindungselement und/oder dem Verbindungselement und dem Entkopplungselement unterschiedlich gewählt. Durch den Unterschied in der Körperschallimpedanz wird der Körperschall an der Verbindung zwischen dem Antriebsbefestigungselement und dem Verbindungselement bzw. an der Verbindung zwischen dem Verbindungselement und dem Entkopplungselement nur zum Teil auf das andere Element übertragen, so dass dadurch der an der Fahrzeugkarrosserie ankommende Körperschall deutlich reduziert ist und so die Geräuschentwicklung während des Betriebs eines Wischerantriebs reduziert ist.

In einer weiteren Ausführungsform weist das Befestigungssystem ein Dämpfungselement auf, das das Entkopplungselement mit der Fahrzeugkarosserie verbindet, wobei das Dämpfungselement eine Körperschallimpedanz aufweist, die unterschiedlich zu der Körperschallimpedanz des Entkopplungselements ist. Dadurch kann die Körperschallübertragung zusätzlich gedämpft werden.

Besonders vorteilhaft ist, wenn die Differenz zwischen der Körperschallimpedanz des Antriebsbefestigungselements und dem Verbindungselement und/oder dem Verbindungselement und dem Entkopplungselement wenigstens 3 dB, bevorzugterweise wenigstens 5 dB, in einer besonders vorteilhaften Ausführungsform insbesondere wenigstens 10 dB ist. Noch vorteilhafter wäre eine Differenz von mindestens 30 dB.

Erfindungsgemäß weist das Entkopplungselement zumindest einen stiftförmigen Abschnitt auf, der von dem Verbindungselement zumindest teilweise umfasst ist. Auf diese Weise kann eine zuverlässige Verbindung zwischen Verbindungselement und Entkopplungselement bereitgestellt werden.

In einer weiteren Ausführungsform weist das Entkopplungselement einen weiteren Abschnitt auf, in dem das Dämpfungselement das Entkopplungselement zumindest teilweise umfasst, wobei das Dämpfungselement umfangsseitig zylindrisch ausgeführt ist und ausgelegt ist, in eine Bohrung der Fahrzeugkarosserie einzugreifen. Auf diese Weise kann eine besonders einfache Befestigung des Entkopplungselements an der Fahrzeugskarosserie bereitgestellt werden.

In einer weiteren Ausführungsform weist das Entkopplungselement einen teilringförmigen Abschnitt auf, wobei das Dämpfungselement zylindrisch ausgebildet und umfangsseitig zumindest teilweise durch den teilringförmigen Abschnitt des Entkopplungselements umfasst ist. Auf diese Weise kann eine einfache Befestigung des Dämpfungselements an dem Entkopplungselement bereitgestellt werden, so dass das Dämpfungselement mittels Schrauben oder Bolzen mit der Fahrzeugkarosserie verbunden werden kann.

In einer weiteren Ausführungsform ist das Verbindungselement als ein geschlossenes Hohlprofil oder ein U-Profil oder ein T-Profil oder ein Doppel-T-Profil oder ein Kreuzprofil ausgebildet. Auf diese Weise kann das Verbindungselement besonders biegesteif ausgebildet werden und einfach mit dem Entkopplungselement bzw. dem Antriebsbefestigungselement verbunden werden.

In einer weiteren Ausführungsform weist das Verbindungselement einen metallischen Werkstoff und das Entkopplungselement und/oder das Antriebsbefestigungselement einen Kunststoff, insbesondere einen mit Glasfaser verstärkten Kunststoff als Werkstoff auf. Alternativ sind auch andere Verbundwerkstoffe denkbar. Diese Werkstoffkombination ermöglicht, dass das Verbindungselement biegesteif ausgebildet werden kann und gleichzeitig das Entkopplungselement bzw. das Antriebsbefestigungselement in ihrer komplexen Geometrie einfach hergestellt werden können.

In einer weiteren Ausführungsform weist das Entkopplungselement eine Rastvorrichtung auf, die das Entkopplungselement mit dem Dämpfungselement verbindet. Auf diese Weise kann in der Montage schnell das Entkopplungselement mit dem Dämpfungselement verbunden werden.

Nachfolgend wird die Erfindung anhand von Figuren näher erläutert. Dabei zeigen:
Figur 1 eine schematische Draufsicht auf zwei Befestigungssysteme zur Befestigung eines Wischerantriebs,
Figur 2 ein erstes Befestigungssystem in Draufsicht,
Figur 3 ein zweites Befestigungssystem in Draufsicht in teilmontiertem Zustand,
Figur 4 das in Figur 3 gezeigte zweite Befestigungssystem in montiertem Zustand,
Figur 5 einen Schnitt durch das in Figur 4 gezeigte zweite Befestigungssystem,
Figur 6 eine Seitenansicht des Wischerantriebs mit dem ersten und dem zweiten Befestigungssystem,
Figur 7 eine Seitenansicht des Wischerantriebs mit Varianten des ersten und zweiten Befestigungssystems, und
Figur 8 eine Seitenansicht des Wischerantriebs mit dem ersten und zweiten Befestigungssystem mit Rastelementen.

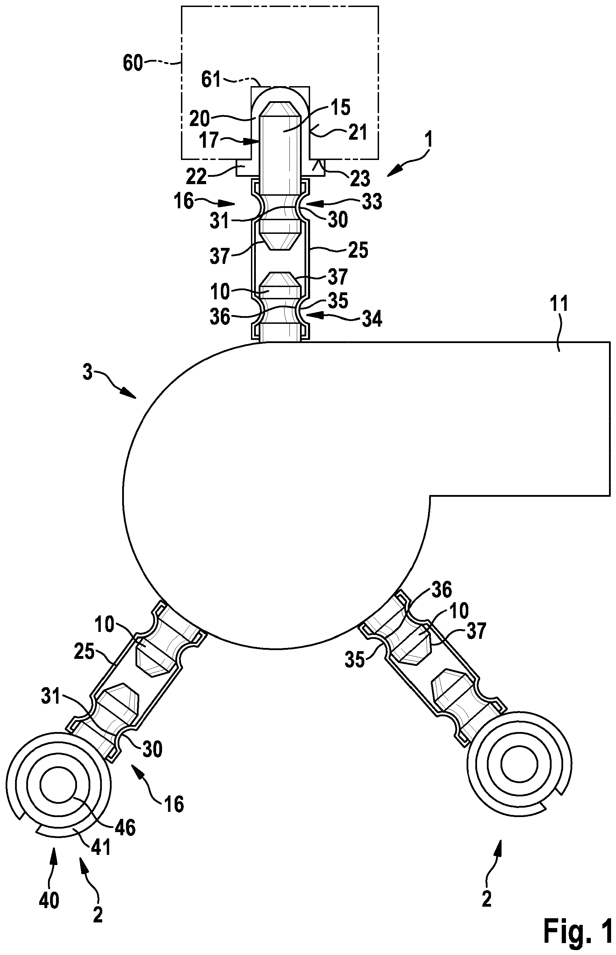

Figur 1 zeigt eine Draufsicht auf zwei Befestigungssysteme 1, 2 zur Befestigung eines Wischerantriebs 3, insbesondere eines Wischerdirektantriebs in einem Kraftfahrzeug. Ein in der Figur 1 oberseitig angeordnetes erstes Befestigungssystem 1 umfasst ein mit einem Gehäuse 11 des Wischerantriebs 3 direkt verbundenes Antriebsbefestigungselement 10, ein erstes Dämpfungselement 20 und ein an dem ersten Dämpfungselement 20 angeordnetes erstes Entkopplungselement 15. Das erste Entkopplungselement 15 und das Antriebsbefestigungselement 10 sind über ein Verbindungselement 25 verbunden.

Um eine erste Verbindung 33 zwischen dem ersten Entkopplungselement 15 und dem Verbindungselement 25 bereitzustellen, weist das erste Entkopplungselement 15 einen stiftförmigen Abschnitt 16 auf, der vorzugsweise zylindrisch ausgebildet ist. An einer dem ersten Entkopplungselement 15 abgewandten Seite des stiftförmigen Abschnitts 16 sind Abschrägungen 37 vorgesehen. Die erste Verbindung 33 verbindet das Verbindungselement 25 mit dem stiftförmigen Abschnitt 16 mittels einer Einkerbung 31 am stiftförmigen Abschnitt 16 bzw. einer Ausbuchtung 30 am Verbindungselement 25, die ineinander eingreifen. Die Einkerbung 31 des stiftförmigen Abschnitts 16 bzw. die Ausbuchtung 30 des Verbindungselements 25 werden durch einen Quetschprozess hergestellt, bei dem nach dem Aufschieben des Verbindungselements 25 auf den stiftförmigen Abschnitt 16 durch Druck auf die Umfangsseite des Verbindungselements 25 die Ausbuchtungen 30 des Verbindungselements 25 bzw. die Einkerbungen 31 des stiftförmigen Abschnitts durch Kaltverformung eingebracht werden. Auf diese Weise wird eine im mikroskopischen Bereich elastische Verbindung zwischen dem stiftförmigen Abschnitt 16 des Entkopplungselements 15 und dem Verbindungselement 25 bereitgestellt. Alternativ sind auch andere plastische Verformungsverfahren zur Verbindung des Verbindungselements 25 mit dem ersten Entkopplungselement 15 denkbar, insbesondere Rollen, Verprägen oder Verstemmen.

Analog dazu wird ebenso eine zweite Verbindung 34 zwischen dem Verbindungselement 25 und dem Antriebsbefestigungselement 10 hergestellt. Hierzu werden auf die gleiche Weise wie beim stiftförmigen Abschnitt 16 und dem Verbindungselement 25 Ausbuchtungen 35 in das Verbindungselement 25 und Einkerbungen 36 in das Antriebsbefestigungselement 16 durch Kaltverformung des Verbindungselements 25 und des Antriebsbefestigungselements 10 eingebracht.

Das Antriebsbefestigungselement 10 kann alternativ an einem nicht gezeigten Zwischenelement befestigt sein, das das Antriebsbefestigungselement 10 mit dem Gehäuse 11 des Wischerantriebs 3 verbindet. Dabei kann das Zwischenelement beispielsweise aus mehreren Platten, vorzugsweise aus Metall, gebildet sein. An dem Gehäuse 11 des Wischerantriebs 3 ist das Verbindungselement 25 mittels des an dem Zwischenelement angeordneten Antriebsbefestigungselement 10 befestigt. Auch ist denkbar, das erste Entkopplungselement 15 direkt mit dem Zwischenelement zu verbinden. Auch kann das Antriebsbefestigungselement 10 statt einer direkten Verbindung, wie in Figur 1 gezeigt, mit dem Gehäuse 11 verschraubt oder auch in das Gehäuse 3 eingesteckt sein.

Das Entkopplungselement 15 weist einen weiteren Abschnitt 17 auf, der umfangsseitig durch das erste Dämpfungselement 20 umfasst ist. Das erste Dämpfungselement 20 weist hierbei eine zylinderförmige Außenkontur an seiner Umfangsfläche 21 auf, die durch einen Begrenzungskragen 22 in ihrer axialen Erstreckung begrenzt wird. Auf diese Weise kann das Entkopplungselement 15 mit dem ersten Dämpfungselement 20 in eine Bohrung 61 einer Fahrzeugkarosserie 60 zur Befestigung an dieser eingesteckt werden. Dabei wird ein Einschubweg des Dämpfungselements 20 durch den Begrenzungskragen 22 bzw. ein Anschlagen einer Stirnfläche 23 des Begrenzungskragens 22, die der Fahrzeugkarosserie 60 zugewandt ist, an der Fahrzeugkarosserie 60 begrenzt. Die halbkugelförmige Ausbildung des Dämpfungselements 20 an seiner der Fahrzeugkarosserie 60 zugewandten Stirnseite erleichtert das Einschieben des ersten Dämpfungselements 20 bzw. des ersten Entkopplungselements 15 in die Bohrung 61 der Fahrzeugkarosserie 60.

In der Ausführungsform weist das Verbindungselement 25 ein geschlossenes Hohlprofil auf. Durch diese Ausgestaltung kann das Verbindungselement 25 einfach auf den stiftförmigen Abschnitt 16 des Entkopplungselements 15 in der Montage des Befestigungssystems 1 aufgeschoben werden. Selbiges gilt auch für die Montage des Verbindungselements 25 an dem Antriebsbefestigungselement 10. Alternativ zu dem Hohlprofil des Verbindungselements 25 sind auch andere Profilarten denkbar. Beispielsweise wäre auch ein U-Profil oder ein T-Profil oder ein Doppel-T-Profil oder ein Kreuzprofil anstelle des Hohlprofils für das Verbindungselement 25 denkbar. Diese Profile haben weiterhin den Vorteil, dass sie besonders biegesteif sind. Wesentlich ist dabei, dass diese Profilarten sich auch dazu eignen, durch ein Verpressen des Verbindungselements 25 mit dem stiftförmigen Abschnitt 16 bzw. dem Antriebsbefestigungselement 10 die Verbindung 33, 34 bereitzustellen.

Um eine Anpassung an unterschiedliche Fahrzeugkarosserien 60 von unterschiedlichen Kraftfahrzeugen zu erreichen, kann in der Ausführungsform die Länge, Querschnitt und Form des Verbindungselements 25 fahrzeugspezifisch variiert werden, so dass ein Wischerantrieb für verschiedene Fahrzeugkarosserien bzw. Fahrzeuggeometrien einsetzbar ist. Zusätzlich kann, falls notwendig, auch die Geometrie des Entkopplungselements 15 bzw. des Dämpfungselements 20 in seinem Durchmesser und in seiner Länge an die Bohrung 61 in der Fahrzeugkarosserie 60 entsprechend angepasst werden. Auch kann eine Anpassung an die Fahrzeugkarosserie 60 durch eine Variation der Länge des Antriebbefestigungselements 60 erfolgen.

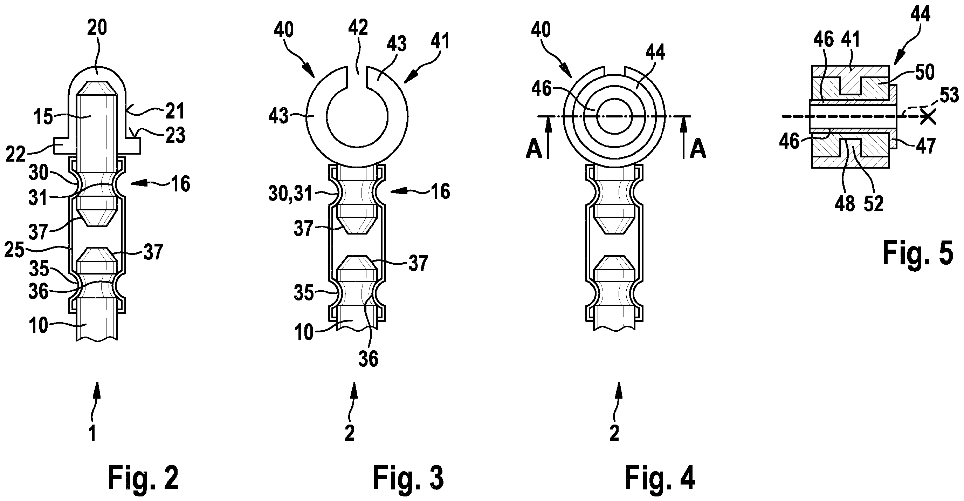

Alternativ zu dem oberseitig in Figur 1 und in Figur 2 dargestellten ersten Befestigungssystem 1 kann der Wischerantrieb 3 durch das unterseitig in Figur 1 und in Figur 3 in teilmontiertem und in montiertem Zustand in den Figuren 4 und 5 gezeigte zweite Befestigungssystem 2 an der Fahrzeugkarosserie 60 befestigt werden, wobei Figur 5 Schnitt durch das zweite Entkopplungselement 40 der in Figur 4 gezeigten Schnittebene A-A zeigt. Das zweite Befestigungssystem 2 weist das Antriebsbefestigungselement 10, das Verbindungselement 25 sowie ein zweites Entkopplungselement 40 auf. Das zweite Entkopplungselement 40 umfasst ebenso wie das erste Entkopplungselement 15 den stiftförmigen Abschnitt 16. Der stiftförmige Abschnitt 16 ist wie beim ersten Entkopplungselement 15 ausgebildet. Auch das Verbindungselement 25 sowie das Antriebsbefestigungselement 10 entsprechen dem Verbindungselement 25 des ersten Befestigungssystems bzw. dem Antriebsbefestigungselement 10 des ersten Befestigungssystems 1.

Das zweite Entkopplungselement 40 umfasst einen teilringförmigen Abschnitt 41. Dieser weist zwei ringförmige Bügel 43 auf, die am entgegengesetzten Ende zu dem stiftförmigen Abschnitt 16 durch eine Ausnehmung 42 voneinander getrennt sind. Die Bügel 43 umfassen in montiertem Zustand (vgl. Figuren 4 und 5) ein zweites Dämpfungselement 44 an dessen äußerer Umfangsfläche. Das zweite Dämpfungselement 44 ist hohlzylindrisch ausgebildet und weist eine Buchse 46 und einen elastischen Abschnitt 50 auf. Der elastische Teil ist an seiner inneren Umfangsfläche durch die Buchse 46 verstärkt. Die Buchse 46 weist in Figur 5 rechtsseitig eine Oberflächenverstärkung 47 auf. Die Buchse 46 dient dazu, das zweite Dämpfungselement 44 mittels einer symbolisch in Figur 5 dargestellten Schraube 53 oder eines Bolzens oder eines Niets mit der Fahrzeugkarosserie 60 zu verbinden und gleichzeitig dabei ein Quetschen des elastischen Abschnitts 50 des zweiten Dämpfungselements 44 zu verhindern. Dabei dient die Oberflächenverstärkung 47 zur Auflage von Muttern oder Schraubenköpfen oder Nietköpfen. Radial außenseitig weist das zweite Dämpfungselement 44 im elastischen Teil 50 eine Nut 48 auf, in die eine Ausbuchtung 52 der Bügel 43 des zweiten Entkopplungselements 40 eingreift. Auf diese Weise kann eine axiale Verschiebung in Längsrichtung der Buchse 46 vermieden werden. Ferner kann durch eine Variation der Länge des Verbindungselements 25 auch der Befestigungsabstand zwischen Antriebsbefestigungselement 10 und der Längsachse der Buchse 46 des zweiten Entkopplungselements 40 fahrzeugspezifisch eingestellt werden.

Im Betrieb des Wischerantriebs 3 erzeugt der Wischerantrieb 3 Schwingungen, die als Körperschall über das Gehäuse 11 an das Antriebsbefestigungselement 10 übertragen werden. Durch die Verbindungen 33, 34 zwischen dem Antriebsbefestigungselement 10 und dem Verbindungselement 25 bzw. zwischen dem Verbindungselement 25 und dem Entkopplungselement 15 wird der Körperschall weiter an die Fahrzeugkarosserie 60 übertragen. Über die Fahrzeugkarosserie 60 wird der Körperschall in den Innenraum des Kraftfahrzeugs weiter übertragen und führt dort zu einer für die Fahrzeuginsassen störenden Geräuschentwicklung.

In der Ausführungsform weisen das Antriebsbefestigungselement 10, das Verbindungselement 25 sowie das Entkopplungselement 15, 40 und das Dämpfungselement 20, 44 jeweils eine Körperschallimpedanz auf. Unter einer Körperschallimpedanz wird der Widerstand zur Weiterleitung von mechanischen Schwingungen in einem Körper verstanden. Dabei sind die Körperschallimpedanzen des Antriebsbefestigungselements 10, des Verbindungselements 25, des Entkopplungselements 15, 40 und des Dämpfungselements 20, 44 unterschiedlich zueinander gewählt. In der Ausführungsform genügt es hierbei, dass die direkt aneinander anliegenden Elemente 10, 15, 20, 25, 40, 44 unterschiedliche Körperschallimpedanzen aufweisen. So liegen beispielsweise in der ersten Verbindung 33 das Antriebsbefestigungselement 10 und das Verbindungselement 25 in direktem Kontakt aneinander an. Sind die Körperschallimpedanzen des Antriebsbefestigungselements 10 und des Verbindungselements 25 unterschiedlich, ergibt sich in der ersten Verbindung 33 ein Körperschallimpedanzsprung. Dies führt dazu, dass nur ein Teil des im Antriebsbefestigungselement 10 vom Wischerantrieb 3 weitergeleiteten Körperschalls an das Verbindungselement 25 in der ersten Verbindung 33 weiter übertragen wird. Der nichtübertragene Teil des Körperschalls wird an der Grenzfläche des Antriebsbefestigungselements 10 zum Verbindungselement 25 in das Antriebsbefestigungselement 60 zurückreflektiert. Gleiches gilt auch für die Übertragung von Körperschall in der zweiten Verbindung 34 und in der Verbindung zwischen Entkopplungselement 15, 40 und Dämpfungselement 20, 44 bzw. vom elastischen Teil 50 des zweiten Dämpfungselements 44 auf die Buchse 46. Besonders vorteilhaft ist hierbei die Differenz der jeweiligen Körperschallimpedanzen von wenigstens 3 dB, vorteilhafterweise wenigstens 5 dB. Dabei ist es besonderem vorteilhaft, wenn die Differenz der Körperschallimpedanzen der jeweils aneinander angrenzenden Elemente 10, 15, 20, 25, 40, 44 des Befestigungssystems 1, 2 so groß wie möglich ist. Somit ist es von besonderem Vorteil, wenn die Differenz größer 10 dB oder 20 dB ist. Am vorteilhaftesten ist eine Differenz der Körperschallimpedanzen von wenigstens 30 dB.

Die Körperschallimpedanz kann dabei sowohl durch die geometrische Ausgestaltung jedes einzelnen Elements 10, 15, 20, 25, 40, 44 des Befestigungssystems 1, 2, als auch durch den Werkstoff bzw. der Dichte des Werkstoffs der Elemente 10, 15, 20, 25, 40, 44 des Befestigungssystems 1, 2 beeinflusst werden. Werden die Werkstoffe der Elemente 10, 15, 20, 25, 40, 44 des Befestigungssystems 1, 2 günstig miteinander kombiniert, so kann eine besonderes hohe Dämpfung der Körperschallübertragung vom Wischerantrieb 3 an die Fahrzeugkarosserie durch die jeweiligen Körperschallimpedanzsprünge an der Verbindung zwischen den Elementen 10, 15, 20, 25, 40, 44 des Befestigungssystems 1, 2 erreicht werden.

In der Ausführungsform weist das Antriebsbefestigungselement 10 einen Kunststoff, insbesondere einen glasfaserverstärkten Kunststoff auf. Das Verbindungselement 25 weist einen metallischen Werkstoff auf. Das Entkopplungselement 15, 40 ist wiederum aus einen Kunststoff, insbesondere einem glasfaserverstärkten Kunststoff gefertigt, während hingegen das Dämpfungselement 16, 44 einen elastischen Werkstoff, insbesondere Gummi oder einen Elastomer, aufweist. Die Buchse 46 weist wiederum Metall als Werkstoff auf. Dadurch haben die direkt aneinander anliegenden Elemente 10, 15, 20, 25, 40, 44 des Befestigungssystems 1, 2 jeweils eine andere zum anliegenden Element 10, 15, 20, 25, 40, 44 unterschiedliche Körperschallimpedanz, so dass durch die Differenz der Körperschallimpedanz jeweils der Körperschall vermindert weiter übertragen wird. Vorteilhaft ist, wenn die Körperschallimpedanzen aller Elemente 10, 15, 20, 25, 40, 44 untereinander unterschiedlich und die Körperschallimpedanzsprünge an den Verbindungsstellen, insbesondere an den Verbindungen 33, 34möglichst groß sind.

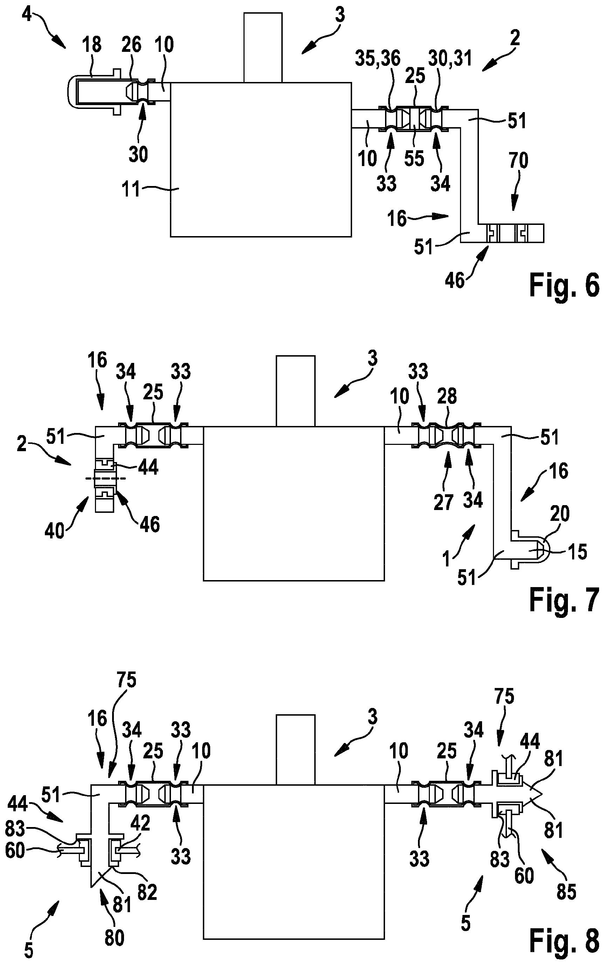

Figur 6 zeigt eine schematische Seitenansicht des Wischerantriebs 3 mit linksseitig einem dritten Befestigungssystem 4 und rechtsseitig angeordnet einer Abwandlung des zweiten Befestigungssystems 2.

Das dritte Befestigungssystem 4 ist eine Abwandlung des in den Figuren 1 und 2 dargestellten ersten Befestigungssystems 1. Das dritte Befestigungssystem 4 weist ebenso ein Antriebsbefestigungselement 10, das an einem Gehäuse 11 des Wischerantriebs 3 angeordnet ist, auf. Das Antriebsbefestigungselement 10 ist über die erste Verbindung 33 mit einem Verbindungselement 26 verbunden. Das Verbindungselement 26 ist gegenüber dem in Figuren 1 bis 5 dargestellten Verbindungselement 25 dahingehend abgewandelt, dass das Verbindungselement 26 auf der zum Antriebsbefestigungselement 10 abgewandten Seite verschlossen ist. Im sonstigen entspricht die Ausgestaltung des Verbindungselements 26 dem in Figuren 1 bis 5 gezeigten Verbindungselement 25. Das Verbindungselement 26 wird umfangsseitig und stirnseitig durch ein drittes Entkopplungselement 18 umschlossen. Das dritte Entkopplungselement 18 ist in der Ausführungsform mit einem weichen Werkstoff ausgebildet, um die Eigenschaften der in den Figuren 1 bis 5 gezeigten Entkopplungselemente 15, 40 und die Eigenschaften der Dämpfungselemente 20, 44 zu kombinieren. Dabei ist die Außenkontur des dritten Entkopplungselements 18 entsprechend der Außenkontur des ersten Dämpfungselements 20, wie in Figuren 1 und 2 dargestellt, ausgebildet, um das dritte Entkopplungselement 18 in der Bohrung 61 der Fahrzeugkarosserie 60 zu befestigen. Vorteilhafterweise ist hierbei der Außendurchmesser des dritten Entkopplungselements 18 größer als der Bohrungsdurchmesser der Bohrung 61 der Fahrzeugkarosserie 60 gewählt, um ein Herausrutschen des dritten Entkopplungselements 18 aus der Bohrung 61 zu vermeiden.

Rechtsseitig in Figur 6 ist das abgewandelte zweite Befestigungssystem 2 dargestellt, das im Wesentlichen in seinem Aufbau dem in den Figuren 1, 3 bis 5 gezeigten Aufbau entspricht. Abgewandelt ist hierbei insbesondere, dass der stiftförmige Abschnitt 16 des zweiten Entkopplungselements zwei 90°-Biegestellen 51 aufweist, so dass eine Befestigungshöhe des zweiten Entkopplungselements 40 an der Fahrzeugkarosserie 60 über dem stiftförmigen Abschnitt 16 angepasst werden kann. Ferner ist zwischen den zueinander gewandten Stirnflächen des Antriebsbefestigungselements 10 und des stiftförmigen Abschnitts 16 des zweiten Entkopplungselements 40 ein drittes Dämpfungselement 55 angeordnet, wobei das Antriebsbefestigungselement 10 so über das Verbindungselement 25 und über das dritte Dämpfungselement 55 mit dem stiftförmigen Abschnitt 16 des zweiten Entkopplungselements 40 verbunden ist. Auf diese Weise kann eine besonders steife, aber gut die Körperschallübertragung dämpfende Verbindung 33, 34 zwischen dem Antriebsbefestigungselement 10 und dem zweiten Entkopplungselement 40 bereitgestellt werden.

Figur 7 zeigt eine Seitenansicht des Wischerantriebs 3 mit einem abgewandelten ersten Befestigungssystem 1 (rechtsseitig dargestellt) und einem abgewandelten zweiten Befestigungssystem 2 (linksseitig in Figur 7 dargestellt). Das erste Befestigungssystem 1 entspricht dem in den Figuren 1 und 2 dargestellten Befestigungssystem, wobei hierbei zusätzlich das in Figuren 1 und 2 gezeigte Verbindungselement als alternatives Verbindungselement 27 im Bereich zwischen dem Antriebsbefestigungselement 10 und dem stiftförmigen Abschnitt 16 des ersten Entkopplungselements 15 eine Einschnürung 28 aufweist, um das Verbindungselement 27 in seiner Biegesteifigkeit zu schwächen und so eine erleichterte Montage des Verbindungselements 27 bereitzustellen. Auf diese Weise können Körperschallschwingungen zusätzlich durch das Verbindungselement 27 in der Übertragung vom Antriebsbefestigungselement 10 hin zum ersten Entkopplungselement 15 hin abgeschwächt werden. Des Weiteren wird durch den reduzierten Innendurchmesser des Verbindungselements 27 eine Einschubtiefe für das Antriebsbefestigungselement 10 bzw. das erste Entkopplungselement 15 festgelegt. Ferner weist das erste Entkopplungselement 15, wie auch das dritte Entkopplungselement 18, Biegestellen 51 auf, um den Befestigungspunkt für das erste Dämpfungselement 20 in seiner Befestigungshöhe nach unten hin zu verschieben. Auch kann durch die Biegestellen 51 die Ausrichtung des ersten Dämpfungselements 20 variiert werden.

Das linksseitig angeordnete zweite Befestigungssystem 2 entspricht dem in Figur 1 und Figuren 3 bis 5 gezeigten zweiten Befestigungssystem 2, wobei der stiftförmige Abschnitt 16 ebenso eine Biegestelle 51 aufweist, um eine Längsachse der Buchse 46 des zweiten Dämpfungselements 44 in seiner Ausrichtung um 90° zu neigen. Es sind aber auch andere Winkel denkbar. Auf diese Weise wird eine erhöhte Flexibilität zur Befestigung des Wischerantriebs an der Fahrzeugkarosserie 60 gegeben.

Figur 8 zeigt eine Seitenansicht des Wischerantriebs 3 mit einem vierten Befestigungssystem 5. Das vierte Befestigungssystem 5 weist wie auch die anderen Befestigungssysteme 1, 2, 4 das Antriebsbefestigungselement 10 auf, das am Gehäuse 11 des Wischerantriebs 3 angeordnet ist. Das Antriebsbefestigungselement 10 wird wie auch in den anderen Befestigungssystemen 1, 2 und 4 durch das Verbindungselement 25 umfasst und wird mittels der ersten Verbindung 33 mit dem Verbindungselement 25 verbunden. Am gegenüberliegenden Ende des Verbindungselements 25 umfasst dieses den stiftförmigen Abschnitt 16 eines vierten Entkopplungselements 75. Das vierte Entkopplungselement 75 kann wahlweise eine Biegestelle 51 aufweisen oder geradlinig (wie in Figur 8 rechtseitig dargestellt) ausgebildet sein. Am zum Verbindungselement 25 gegenüberliegenden Ende des stiftförmigen Abschnitts 16 ist eine Rastvorrichtung 80, 85 vorgesehen. In der linksseitig dargestellten Variante weist die erste Rastvorrichtung 80 eine Rastnase 81 auf, die im montierten Zustand das zweite Dämpfungselement 44 hintergreift. Die Rastnase 81 ist einseitig an dem vierten Entkopplungselement 75 ausgebildet und weist eine keilförmig angeordnete Stirnfläche 82 auf, um leichter durch das zweite Dämpfungselement 44 in der Montage durchzudringen. Das zweite Dämpfungselement 44 wird jedoch nicht wie in Figur 1, 4 und 5 durch die Bügel des Entkopplungselements gehalten, sondern hierbei greift in die Ausnehmung 43 des elastischen Teils 50 des zweiten Dämpfungselements 44 die Fahrzeugkarosserie 60 des Kraftfahrzeugs 1 ein.

Alternativ weist das vierte Entkopplungselement 75 eine zweite Rastvorrichtung 85, wie in Figur 8 rechtseitig dargestellt, auf, die zwei gegenüberliegend angeordnete Rastnasen 81 aufweist und beidseitig das zweite Dämpfungselement 44 hintergreift. Ferner ist an dem vierten Entkopplungselement 75 eine Anschlagsfläche 83 vorgesehen, um die Einschublänge des rechtsseitig angeordneten Abschnitts mit der zweiten Rastvorrichtung 85 zu begrenzen.

Die in den Figuren gezeigten Ausführungsformen der Befestigungssysteme 1, 2, 4, 5 sind beispielhaft. Dabei wird insbesondere darauf hingewiesen, dass die einzelnen Elemente 10, 15, 20, 25, 40, 44 der Befestigungssysteme 1, 2, 4, 5 untereinander entsprechend der Ausgestaltung des Wischerantriebs 3 bzw. der Geometrie der Fahrzeugkarosserie 60 miteinander kombiniert werden können. Insbesondere kann eine Anpassung hierbei durch eine Veränderung der Verbindungselement 25, 26, 27 bzw. Entkopplungselement 15, 18, 40, 75 in ihrer Länge, Querschnitt und Form erfolgen. Auf diese Weise kann ein besonders leichte Befestigung des Wischerantriebs 3 an der Fahrzeugkarosserie 60 bereitgestellt werden.

Ferner eignen sich die gezeigten Befestigungssysteme 1, 2, 4, 5 insbesondere zur Befestigung von Wischerdirektantrieben. Des Weiteren wird betont, dass die in den Figuren gezeigten Befestigungspunkte an der Fahrzeugkarosserie 60 beispielhaft sind und je nach Fahrzeugkarosserie 60 eine Anpassung des Befestigungssystems 1, 2, 4, 5 durch den Fachmann durch eine adequate Kombination der verschiedenen gezeigten Elemente 10, 15, 20, 25, 40, 44 erfolgt.

## Patentansprüche

1. Befestigungssystem (1; 2; 4; 5) mit einem Wischerantrieb (3) eines Kraftfahrzeugs, aufweisend ein stiftförmiges Antriebsbefestigungselement (10), das an dem Wischerantrieb (3) angeordnet ist, ein Entkopplungselement (15; 18; 40; 75), das mit einer Karosserie (60) des Kraftfahrzeugs verbindbar ist, und ein Verbindungselement (25; 26; 27), das das Antriebsbefestigungselement (10) mit dem Entkopplungselements (15; 18; 40; 75) verbindet, wobei das Antriebsbefestigungselement (10), das Verbindungselement (25; 26; 27) und das Entkopplungselement (15; 18; 40; 75) jeweils eine Körperschallimpedanz aufweisen, wobei die Körperschallimpedanz zwischen dem Antriebsbefestigungselement (10) und dem Verbindungselement (25; 26; 27) sowie zwischen dem Verbindungselement (25; 26; 27) und dem Entkopplungselement (15; 18; 40; 75) unterschiedlich ist, **dadurch gekennzeichnet, dass** das Entkopplungselement (15; 18; 40; 75) zumindest einen stiftförmigen Abschnitt (16) aufweist, der von dem Verbindungselement (25; 26; 27) zumindest teilweise umfasst ist.

2. Befestigungssystem (1; 2; 4; 5) nach Anspruch 1, **gekennzeichnet durch** ein Dämpfungselement (20), das das Entkopplungselement (15; 18; 40; 75) mit der Fahrzeugkarosserie (60) verbindet, wobei das Dämpfungselement (20) eine Körperschallimpedanz aufweist, die unterschiedlich zu der Körperschallimpedanz des Verbindungs- und/oder Entkopplungselements (15; 18; 40; 75) ist.

3. Befestigungssystem (1; 2; 4; 5) nach Anspruch 1 oder 2, **dadurch gekennzeichnet, dass** die Differenz zwischen der Körperschallimpedanz des Antriebsbefestigungselements (10) und dem Verbindungselement (25; 26; 27) und/oder dem Verbindungselement (25; 26; 27) und dem Entkopplungselement (15; 18; 40; 75) wenigstens 3 dB, insbesondere wenigstens 20 dB, ist.

4. Befestigungssystem (1; 2; 4; 5) nach einem der Ansprüche 2 bis 3, **dadurch gekennzeichnet, dass** das Entkopplungselement (15; 18; 40; 75) einen weiteren Abschnitt (17) aufweist, in dem das Dämpfungselement (20) das Entkopplungselement (15; 18; 40; 75) zumindest teilweise umfasst, wobei das Dämpfungselement (20) umfangsseitig zylindrisch ausgeführt ist und ausgelegt ist, in eine Bohrung (61) der Fahrzeugkarosserie (60) einzugreifen.

5. Befestigungselement (1; 2; 4; 5) nach einem der Ansprüche 2 bis 5, **dadurch gekennzeichnet, dass** das Entkopplungselement (40) einen teilringförmigen Abschnitt (41) aufweist, wobei das Dämpfungselement (44) zylindrisch ausgebildet ist und umfangsseitig zumindest teilweise durch den teilringförmigen Abschnitt (41) des Entkopplungselements (40) umfasst ist.

6. Befestigungselement (1; 2; 4; 5) nach Anspruch 5, **dadurch gekennzeichnet, dass** das Entkopplungselement (40) im Bereich des stiftförmigen Abschnitts (16) des Entkopplungselements (40) wenigstens eine Biegestelle (51) aufweist.

7. Befestigungssystem (1; 2; 4; 5) nach einem der Ansprüche 1 bis 6, **dadurch gekennzeichnet, dass** das Verbindungselement (25; 26; 27) ein geschlossenes Hohlprofil oder ein U-Profil oder ein T-Profil oder ein Doppel-T-Profil oder ein Kreuzprofil aufweist.

8. Befestigungssystem (1; 2; 4; 5) nach einem der Ansprüche 1 bis 7, **dadurch gekennzeichnet, dass** das Verbindungselement (25; 26; 27) im Wesentlichen einen metallischen Werkstoff und das Entkopplungselement (15; 18; 40; 75) und/oder das Antriebsbefestigungselement (10) einen Kunststoff, insbesondere einen Verbundwerkstoff, insbesondere einen glasfaserverstärkten Kunststoff, aufweist.

9. Befestigungssystem (1; 2; 4; 5) nach einem der Ansprüche 1 bis 8, **dadurch gekennzeichnet, dass** das Entkopplungselement (75) eine Rastvorrichtung (80; 85) aufweist, die das Entkopplungselement (85) mit dem Dämpfungselement (44) verbindet.

## Claims

1. Fastening system (1; 2; 4; 5) comprising a wiper drive (3) of a motor vehicle, having a pin-shaped drive fastening element (10) which is arranged on the wiper drive (3), a decoupling element (15; 18; 40; 75) which is connectable to a body (60) of the motor vehicle, and a connecting element (25; 26; 27) which connects the drive fastening element (10) to the decoupling element (15; 18; 40; 75), wherein the drive fastening element (10), the connecting element (25; 26; 27) and the decoupling element (15; 18; 40; 75) each have structure-borne-sound impedance, wherein the structure-borne-sound impedance between the drive fastening element (10) and the connecting element (25; 26; 27), and between the connecting element (25; 26; 27) and the decoupling element (15; 18; 40; 75), differs, **characterized in that** the decoupling element (15; 18; 40; 75) has at least one pin-shaped section (16) which is at least partially surrounded by the connecting element (25; 26; 27).

2. Fastening system (1; 2; 4; 5) according to Claim 1, **characterized by** a damping element (20) which connects the decoupling element (15; 18; 40; 75) to the vehicle body (60), wherein the damping element (20) has a structure-borne-sound impedance which differs from the structure-borne-sound impedance of the connecting element and/or coupling element (15; 18; 40; 75).

3. Fastening system (1; 2; 4; 5) according to Claim 1 or 2, **characterized in that** the difference between the structure-borne-sound-impedance of the drive fastening element (10) and the connecting element (25; 26; 27) and/or between the connecting element (25; 26; 27) and the decoupling element (15; 18; 40; 75) is at least 3 dB, in particular at least 20 dB.

4. Fastening system (1; 2; 4; 5) according to either of Claims 2 and 3, **characterized in that** the decoupling element (15; 18; 40; 75) has a further section (17) in which the damping element (20) at least partially surrounds the decoupling element (15; 18; 40; 75), wherein the damping element (20) is of cylindrical design circumferentially and is designed to engage in a bore (61) in the vehicle body (60).

5. Fastening element (1; 2; 4; 5) according to one of Claims 2 to 5, **characterized in that** the decoupling element (40) has a partially annular section (41), wherein the damping element (44) is of cylindrical design and is at least partially surrounded circumferentially by the partially annular section (41) of the decoupling element (40).

6. Fastening element (1; 2; 4; 5) according to Claim 5, **characterized in that** the decoupling element (40) has at least one bending point (51) in the region of the pin-shaped section (16) of the decoupling element (40).

7. Fastening system (1; 2; 4; 5) according to one of Claims 1 to 6, **characterized in that** the connecting element (25; 26; 27) has a closed hollow profile or a U profile or a T profile or an I profile or a cross profile.

8. Fastening system (1; 2; 4; 5) according to one of Claims 1 to 7, **characterized in that** the connecting element (25; 26; 27) substantially comprises a metallic material, and the decoupling element (15; 18; 40; 75) and/or the drive fastening element (10) comprises a plastic, in particular a composite material, in particular a glass-fibre-reinforced plastic.

9. Fastening system (1; 2; 4; 5) according to one of Claims 1 to 8, **characterized in that** the decoupling element (75) has a latching device (80; 85) which connects the decoupling element (85) to the damping element (44).

## Revendications

1. Système de fixation (1 ; 2 ; 4 ; 5) à un entraînement d'essuie-glace (3) d'un véhicule automobile, comprenant un élément de fixation d'entraînement (10) en forme de goupille, lequel est disposé sur l'entraînement d'essuie-glace (3), un élément de désaccouplement (15 ; 18 ; 40 ; 75), lequel peut être relié à une carrosserie (60) du véhicule automobile, et un élément de liaison (25 ; 26 ; 27), lequel relie l'élément de fixation d'entraînement (10) à l'élément de désaccouplement (15 ; 18 ; 40 ; 75), l'élément de fixation d'entraînement (10), l'élément de liaison (25 ; 26 ; 27) et l'élément de désaccouplement (15 ; 18 ; 40 ; 75) présentant respectivement une impédance de bruit solidien, l'impédance de bruit solidien étant différente entre l'élément de fixation d'entraînement (10) et l'élément de liaison (25 ; 26 ; 27) ainsi qu'entre l'élément de liaison (25 ; 26 ; 27) et l'élément de désaccouplement (15 ; 18 ; 40 ; 75), **caractérisé en ce que** l'élément de désaccouplement (15 ; 18 ; 40 ; 75) comprend au moins une partie (16) en forme de goupille, laquelle est entourée au moins partiellement par l'élément de liaison (25 ; 26 ; 27).

2. Système de fixation (1 ; 2 ; 4 ; 5) selon la revendication 1, **caractérisé par** un élément d'amortissement (20), lequel relie l'élément de désaccouplement (15 ; 18 ; 40 ; 75) à la carrosserie de véhicule (60), l'élément d'amortissement (20) présentant une impédance de bruit solidien qui est différente de l'impédance de bruit solidien de l'élément de liaison et/ou de désaccouplement (15 ; 18 ; 40 ; 75).

3. Système de fixation (1 ; 2 ; 4 ; 5) selon la revendication 1 ou 2, **caractérisé en ce que** la différence entre l'impédance de bruit solidien de l'élément de fixation d'entraînement (10) et de l'élément de liaison (25 ; 26 ; 27) et/ou de l'élément de liaison (25 ; 26 ; 27) et de l'élément de désaccouplement (15 ; 18 ; 40 ; 75) est d'au moins 3 dB, en particulier d'au moins 20 dB.

4. Système de fixation (1 ; 2 ; 4 ; 5) selon l'une des revendications 2 à 3, **caractérisé en ce que** l'élément de désaccouplement (15 ; 18 ; 40 ; 75) comprend une autre partie (17) dans laquelle l'élément d'amortissement (20) entoure l'élément de désaccouplement (15 ; 18 ; 40 ; 75) au moins partiellement, l'élément d'amortissement (20) étant réalisé de manière cylindrique du côté périphérique et étant conçu pour venir en prise dans un alésage (61) de la carrosserie de véhicule (60).

5. Élément de fixation (1 ; 2 ; 4 ; 5) selon l'une des revendications 2 à 5, **caractérisé en ce que** l'élément de désaccouplement (40) comprend une partie (41) partiellement annulaire, l'élément d'amortissement (44) étant réalisé de manière cylindrique et étant entouré du côté périphérique au moins partiellement par la partie (41) partiellement annulaire de l'élément de désaccouplement (40).

6. Élément de fixation (1 ; 2 ; 4 ; 5) selon la revendication 5, **caractérisé en ce que** l'élément de désaccouplement (40) comprend au moins un point de flexion (51) dans la région de la partie (16) en forme de goupille de l'élément de désaccouplement (40).

7. Système de fixation (1 ; 2 ; 4 ; 5) selon l'une des revendications 1 à 6, **caractérisé en ce que** l'élément de liaison (25 ; 26 ; 27) présente un profil creux fermé ou un profil en U ou un profil en T ou un profil en double T ou un profil en croix.

8. Système de fixation (1 ; 2 ; 4 ; 5) selon l'une des revendications 1 à 7, **caractérisé en ce que** l'élément de liaison (25 ; 26 ; 27) comprend sensiblement un matériau métallique et l'élément de désaccouplement (15 ; 18 ; 40 ; 75) et/ou l'élément de fixation d'entraînement (10) comprend/comprennent une matière synthétique, en particulier un matériau composite, en particulier une matière synthétique renforcée par des fibres de verre.

9. Système de fixation (1 ; 2 ; 4 ; 5) selon l'une des revendications 1 à 8, **caractérisé en ce que** l'élément de désaccouplement (75) comprend un dispositif d'encliquetage (80 ; 85), lequel relie l'élément de désaccouplement (85) à l'élément d'amortissement (44).
